# EUROPÄISCHE PATENTSCHRIFT

(11) **EP 2 051 847 B1**
(45) Veröffentlichungstag und Bekanntmachung des Hinweises auf die Patenterteilung: **02.11.2011**
(21) Anmeldenummer: 07803372.7
(22) Anmeldetag: 10.09.2007
(51) Int. Cl.: B32B 1/08, B32B 27/34, F16L 11/04

(54) **DRUCKLUFTBREMSLEITUNG**
COMPRESSED-AIR BRAKE LINE
CONDUITE DE FREIN PNEUMATIQUE

(30) Priorität: 23.10.2006 DE 102006049805
(43) Veröffentlichungstag der Anmeldung: 29.04.2009
(73) Patentinhaber: Evonik Degussa GmbH, 45128 Essen (DE)
(72) Erfinder: DOWE, Andreas, 46325 Borken (DE); BÖER, Michael, 59399 Olfen (DE)
(86) Internationale Anmeldenummer: PCT/EP2007/059455
(87) Internationale Veröffentlichungsnummer: WO 2008/049689

(56) Entgegenhaltungen:
- EP-A- 0 470 605
- DE-A1- 10 137 863
- US-A1- 2004 071 913

## Beschreibung

Gegenstand der Erfindung ist ein Rohr für eine Druckluftbremsleitung, das eine Innen- und eine Außenschicht aus einem höheren Polyamid sowie eine Zwischenschicht aus einem weichgemachten PA6 oder PA66 enthält.

Druckluftbremssysteme werden häufig in Schwerlastfahrzeugen, wie z. B. in Zugmaschinen und ähnlichem, eingesetzt. In solchen Systemen wird das Bremssystem durch Druckluft aktiviert, die durch ein Rohr geleitet wird.

Derzeit werden Druckluftbremsleitungen in erster Linie aus einschichtigen PA11- oder PA12-Rohren gefertigt; darüber hinaus gibt es mehrschichtige Lösungen, bei denen mittels Gewebeverstärkung ein hoher Berstdruck bei guter Flexibilität erzielt werden soll. In Bereichen mit geringen mechanischen und chemischen Anforderungen werden hauptsächlich Systeme auf Basis von Polyurethan eingesetzt. Hier sind insbesondere der Markt für Auflieger und der Ersatzteilmarkt zu nennen. Diese Systeme sind preisgünstiger als Systeme auf Basis von PA11 bzw. PA12, zeigen aber deutliche Nachteile in der mechanischen Festigkeit und der Chemikalienbeständigkeit.

Die höheren Polyamide wie PA612, PA11 oder PA12 sind widerstandfähig gegen Rissbildung sowie beständig gegenüber der Einwirkung von Kraftstoffen, Ölen und Wasser. Sie sind darüber hinaus, im Gegensatz zu PA6, unempfindlich gegen Spannungsrissbildung durch Zinkchlorid. Allerdings sind sie teuer. Um dem Preisdruck im Markt gerecht zu werden, wird intensiv an kostengünstigen Alternativen gearbeitet.

Eine technische Lösung für eine Druckluftbremsleitung wird in der DE-A-101 37 863 beschrieben; sie besteht aus einem Rohr mit der Schichtenfolge PA11 oder PA12/Haftvermittler/schlagzähmodifiziertes PA6 oder PA66; gegebenenfalls schließen sich hieran noch eine weitere Haftvermittlerschicht sowie eine abschließende Schicht aus PA11 oder PA12 an. Alternativ hierzu kann das Rohr der DE-A-101 37 863 die Schichtenfolge PA612/schlagzähmodifiziertes PA6 oder PA66/PA612 besitzen.

Beim Einsatz von schlagzähmodifiziertem PA6 bzw. PA66 kann jedoch nicht das volle Potential der erzielbaren Berstdruckfestigkeit erzielt werden, insbesondere bei erhöhten Temperaturen. Zudem wird durch den Einsatz eines Schlagzähmodifikators häufig eine Reduzierung der, im Vergleich zu PA11 oder PA12 sowieso schon geringeren, Alterungsbeständigkeit von PA6 bzw. PA66 beobachtet.

Die Aufgabe der vorliegenden Erfindung besteht darin, die obengenannten Nachteile zu vermeiden und insbesondere ein kostengünstiges Rohr zur Verfügung zu stellen, das die an eine Druckluftbremsleitung gestellten Anforderungen im Hinblick auf Beständigkeit gegenüber Chemikalien, Motorölen, Zinkchlorid und Streusalzen erfüllt und das eine hohe Berstdruckfestigkeit auch bei erhöhter Temperatur, eine gute Kälteschlagzähigkeit sowie eine gute Alterungsbeständigkeit aufweist.

Diese Aufgabe wurde mit Hilfe eines Rohres gelöst, das folgende Schichten enthält:
I. Eine Außenschicht aus einer Formmasse, die zu mindestens 40 Gew.-%, mindestens 45 Gew.-%, mindestens 50 Gew.-%, mindestens 55 Gew.-% bzw. mindestens 60 Gew.-% ein Polyamid enthält, dessen Monomereinheiten im Mittel mindestens 8, mindestens 9 bzw. mindestens 10 C-Atome enthalten;
II. gegebenenfalls eine Schicht aus einer haftvermittelnden Formmasse,
III. eine Zwischenschicht aus einer Formmasse, die aus folgenden Komponenten besteht:
   a) 70 bis 99 Gew.-%, bevorzugt 75 bis 98 Gew.-% und besonders bevorzugt 78 bis 96 Gew.-% Polyamid, ausgewählt aus PA6, PA66, PA6/66 sowie Mischungen hieraus und
   b) 1 bis 30 Gew.-%, bevorzugt 2 bis 25 Gew.-% und besonders bevorzugt 4 bis 22 Gew.-% Weichmacher,
      wobei die Formmasse keinen Schlagzähmodifikator enthält,
IV. gegebenenfalls einer Schicht aus einer haftvermittelnden Formmasse sowie
V. eine Innenschicht aus einer Formmasse entsprechend der der Schicht I,
   wobei diese Schichten bevorzugt direkt aufeinander folgen.

Der Außendurchmesser des Rohres liegt im Bereich von 6 bis 20 mm und bevorzugt im Bereich von 7 bis 16 mm, während die Wanddicke 1,0 bis 2,0 mm betragen kann. Die Dicke der Schicht III beträgt hierbei 25 bis 75 %, bevorzugt 30 bis 65 % und besonders bevorzugt 35 bis 60 % der Wanddicke, während die Dicke der Schicht II bzw. IV jeweils 0,02 bis 0,2 mm, bevorzugt 0,04 bis 0,16 mm und besonders bevorzugt 0,06 bis 0,14 mm beträgt.

Das Polyamid der Schicht I bzw. V ist herstellbar aus einer Kombination von Diamin und Dicarbonsäure, aus einer ω-Aminocarbonsäure oder dem entsprechenden Lactam. Hierbei enthält die ω-Aminocarbonsäure bzw. das Lactam mindestens 8, mindestens 9 bzw. mindestens 10 C-Atome. Bei Gemischen von Lactamen wird hier das arithmetische Mittel betrachtet. Bei einer Kombination von Diamin und Dicarbonsäure muss das arithmetische Mittel der C-Atome von Diamin und Dicarbonsäure mindestens 8, mindestens 9 bzw. mindestens 10 betragen. Geeignete Polyamide sind beispielsweise: PA610 (herstellbar aus Hexamethylendiamin [6 C-Atome] und Sebacinsäure [10 C-Atome], das Mittel der C-Atome in den Monomereinheiten beträgt hier somit 8), PA88 (herstellbar aus Octamethylendiamin und 1.8-Octandisäure), PA8 (herstellbar aus Capryllactam), PA612, PA810, PA108, PA9, PA614, PA812, PA128, PA1010, PA 10, PA814, PA148, PA1012, PA11, PA1014, PA1212 und PA12. Die Herstellung der Polyamide ist Stand der Technik. Selbstverständlich können auch hierauf basierende Copolyamide eingesetzt werden, wobei gegebenenfalls auch Monomere wie Caprolactam mitverwendet werden können, vorausgesetzt das Mittel der Anzahl der C-Atome hält die obengenannte Bedingung ein.

Das Polyamid kann auch ein Polyetheresteramid oder ein Polyetheramid sein. Polyetheramide sind prinzipiell z. B. aus der DE-OS 30 06 961 bekannt. Sie enthalten als Comonomer ein Polyetherdiamin. Geeignete Polyetherdiamine sind durch Konversion der entsprechenden Polyetherdiole durch reduktive Aminierung oder Kupplung an Acrylnitril mit nachfolgender Hydrierung zugänglich (z. B. EP-A-0 434 244; EP-A-0 296 852). Sie besitzen in der Regel eine zahlenmittlere Molmasse von 230 bis 4000; ihr Anteil am Polyetheramid beträgt bevorzugt 5 bis 50 Gew.-%.

Kommerziell verfügbare Polyetherdiamine ausgehend von Propylenglykol sind als JEFFAMIN^{®} D-Typen bei der Fa. Huntsman kommerziell erhältlich. Grundsätzlich sind auch Polyetherdiamine ausgehend vom 1.4-Butandiol oder 1.3-Butandiol, oder gemischt aufgebaute Polyetherdiamine, etwa mit statistischer oder mit blockweiser Verteilung der von den Diolen herrührenden Einheiten, gut geeignet. Ebenso können auch Mischungen verschiedener Polyamide, ausreichende Verträglichkeit vorausgesetzt, verwendet werden. Verträgliche Polyamidkombinationen sind dem Fachmann bekannt; beispielsweise seien hier die Kombinationen PA12/PA1012, PA12/PA1212, PA612/PA12, PA613/PA12, PA1014/PA12 und PA610/PA12 aufgeführt. Im Zweifelsfall können verträgliche Kombinationen durch Routineversuche ermittelt werden.

Das Polyamid kann einen Überschuss an Aminoendgruppen aufweisen, der in der Regel davon herrührt, dass bei der Herstellung ein Diamin als Molekulargewichtsregler eingesetzt wurde. Der Überschuss an Aminoendgruppen kann auch durch Mischen eines aminogruppenarmen und eines aminogruppenreichen Polyamids eingestellt werden. Das Verhältnis von Aminoendgruppen zu Carboxylendgruppen kann mindestens 51 : 49, bevorzugt mindestens 55 : 45, besonders bevorzugt mindestens 60 : 40 und insbesondere bevorzugt mindestens 70 : 30 betragen.

Neben Polyamid kann die Formmasse der Schicht gemäß I weitere Komponenten enthalten wie z. B. Schlagzähmodifikatoren, andere Thermoplaste, Weichmacher und andere übliche Zusatzstoffe. Erforderlich ist nur, dass das Polyamid die Matrix der Formmasse bildet. Als andere Thermoplaste können beispielsweise andere Polyamide wie etwa PA6 in Mengen eingesetzt werden, die niedriger sind als die des anspruchsgemäß eingesetzten Polyamids.

Darüber hinaus kann die Formmasse noch kleinere Mengen von Zusatzstoffen enthalten, die zum Einstellen bestimmter Eigenschaften benötigt werden. Beispiele hierfür sind Pigmente bzw. Füllstoffe wie Ruß, Titandioxid, Zinksulfid, Silikate oder Carbonate, Verarbeitungshilfsmittel wie Wachse, Zinkstearat oder Calciumstearat, Flammschutzmittel, Glasfasern, Antioxidantien, UV-Stabilisatoren sowie Zusätze, die dem Produkt antielektrostatische Eigenschaften oder eine elektrische Leitfähigkeit verleihen wie z. B. Kohlenstofffasern, Graphitfibrillen, Fasern aus rostfreiem Stahl bzw. Leitfähigkeitsruß.

Die Formmassen der Schichten I und V können sich in der Art des Polyamids sowie in der Art und Menge der anderen Komponenten unterscheiden. Bevorzugt ist jedoch, dass beide Formmassen identisch sind, da dann beide Schichten von einem einzigen Extruder gespeist werden können.

Die Formmasse der Schicht III enthält zwingend Weichmacher. Weichmacher und ihr Einsatz bei Polyamiden sind bekannt. Eine allgemeine Übersicht über Weichmacher, die für Polyamide geeignet sind, kann Gächter/Müller, Kunststoffadditive, C. Hanser Verlag, 2. Ausgabe, S. 296 entnommen werden.

Als Weichmacher geeignete, übliche Verbindungen sind z. B. Ester der p-Hydroxybenzoesäure mit 2 bis 20 C-Atomen in der Alkoholkomponente oder Amide von Arylsulfonsäuren mit 2 bis 12 C-Atomen in der Aminkomponente, bevorzugt Amide der Benzolsulfonsäure.

Als Weichmacher kommen u. a. p-Hydroxybenzoesäureethylester, p-Hydroxybenzoesäureoctylester, p-Hydroxybenzoesäure-i-hexadecylester, Toluolsulfonsäure-n-octylamid, Benzolsulfonsäure-n-butylamid (BBSA) oder Benzolsulfonsäure-2-ethylhexylamid infrage. Darüber hinaus kann als Weichmacher auch ein phosphorhaltiges Flammschutzmittel eingesetzt werden, beispielsweise ein Phosphat oder Phosphonat, wie z. B. Diphenylkresylphosphat.

Die Formmasse der Schicht III kann darüber hinaus übliche Zusatzstoffe enthalten wie z. B. Verarbeitungshilfsmittel oder Stabilisatoren.

PA6 wird durch ringöffnende Polymerisation von Caprolactam hergestellt.

PA66 wird durch Polykondensation von Hexamethylendiamin und Adipinsäure hergestellt. Es ist genauso wie PA6 in einer Vielzahl von Typen handelsüblich.

PA6/66 ist ein Copolykondensat ausgehend von den Monomeren Caprolactam, Hexamethylendiamin und Adipinsäure.

Die Art des Haftvermittlers der Schichten II und IV ist unkritisch. Es kann jeder Haftvermittler verwendet werden, der die Schichten I und III bzw. V und III ausreichend fest miteinander verbindet, so dass sie bei der Herstellung sowie bei der anschließenden Verwendung nicht delaminieren. Im einfachsten Fall ist der Haftvermittler ein Polypropylen, das Säureanhydridgruppen enthält, die auf bekannte Weise durch thermische oder radikalische Reaktion des Polypropylens mit einem ungesättigten Dicarbonsäureanhydrid, einer ungesättigten Dicarbonsäure oder einem ungesättigten Dicarbonsäuremonoalkylester in einer Konzentration eingebracht werden, die für eine gute Anbindung an das Polyamid der benachbarten Schicht ausreicht. Geeignete Reagentien sind beispielsweise Maleinsäure, Maleinsäureanhydrid, Maleinsäuremonobutylester, Fumarsäure, Aconitsäure, Citraconsäure oder Itaconsäureanhydrid. Auf diese Weise sind vorzugsweise 0,1 bis 4 Gew.-% eines ungesättigten Anhydrids auf das Polypropylen aufgepfropft. Gemäß dem Stand der Technik kann das ungesättigte Dicarbonsäureanhydrid oder dessen Vorstufe auch zusammen mit einem weiteren ungesättigten Monomeren wie beispielsweise Styrol, α-Methylstyrol oder Inden aufgepfropft werden. Der Haftvermittler kann jedoch auch ein Blend aus einem derartigen, Säureanhydridgruppen tragenden Polypropylen und einem Polyamid sein.

Alternativ hierzu kann der Haftvermittler auch ein Polyamid sein, das mit den Polyamiden der Schicht III und der Schicht I bzw. V kompatibel ist, beispielsweise PA610 oder PA612.

In einer weiteren Ausführungsform ist der Haftvermittler ein Blend aus zwei verschiedenen Polyamiden, von denen das eine mit dem Material der Schicht III und das andere mit dem Material der Schicht I bzw. V kompatibel ist; Beispiele hierfür sind Blends aus PA6 und PA12 oder Blends aus PA6 und PA612. Falls diese Polymeren miteinander unverträglich sind, wird bei der Blendherstellung unter üblichen Verarbeitungstemperaturen, die zu einer physikalischen Mischung führt, nur in einem relativ engen Zusammensetzungsbereich eine ausreichende Haftvermittlerwirkung erzielt. Bessere Ergebnisse werden erhalten, wenn das Polyamidblend unter Bedingungen hergestellt wird, bei denen in einem gewissen Ausmaß die beiden Polyamide über die Endgruppen oder über Umamidierungsreaktionen miteinander zu Blockcopolymeren reagieren. Hierfür sind in der Regel Temperaturen oberhalb von 250 °C, bevorzugt oberhalb von 280 °C und besonders bevorzugt oberhalb von 300 °C und gegebenenfalls die Anwesenheit von Katalysatoren wie Hypophosphorige Säure, Dibutylzinnoxid, Triphenylphosphin oder Phosphorsäure erforderlich. Man kann auch von einem zunächst unter üblichen Verarbeitungsbedingungen hergestellten Polyamidblend ausgehen, das anschließend der Festphasennachkondensation unter Bedingungen unterworfen wird, die bei Polyamiden üblich sind. Dies sind in der Regel Temperaturen ab 140 °C bis etwa 5K unterhalb des Kristallitschmelzpunkts Tₘ, bevorzugt Temperaturen ab 150 °C bis etwa 10K unterhalb von Tₘ, mit Reaktionszeiten von 2 bis 48 Stunden, bevorzugt 4 bis 36 Stunden und besonders bevorzugt 6 bis 24 Stunden. Besonders vorteilhaft enthält das eine Polyamid einen Überschuss an Aminoendgruppen und das andere Polyamid einen Überschuss an Carboxylendgruppen. Schließlich kann eine Verknüpfung der Komponenten gemäß a) und c) auch durch Zugabe einer reaktiven Verbindung erzielt werden, die vorzugsweise die Polyamidendgruppen miteinander verknüpft, beispielsweise eines Bisoxazolins, Biscarbodiimids, Bismaleinimids, Bisanhydrids, Diisocyanats oder der entsprechenden Verbindungen mit drei oder mehr funktionellen Gruppen. Ein anderer Weg, die Blendkomponenten miteinander verträglich zu machen, ist die Zugabe einer wirksamen Menge eines Verträglichkeitsvermittlers, beispielsweise eines Polyamin-Polyamid-Copolymers.

Das Polyamin-Polyamid-Copolymer wird unter Verwendung folgender Monomere hergestellt:
a) 0,5 bis 25 Gew.-%, bevorzugt 1 bis 20 Gew.-% und besonders bevorzugt 1,5 bis 16 Gew.-%, bezogen auf das Polyamin-Polyamid-Copolymer, eines Polyamins mit mindestens 4, bevorzugt mindestens 8 und besonders bevorzugt mindestens 11 Stickstoffatomen und einem zahlenmittleren Molekulargewicht Mₙ von mindestens 146 g/mol, bevorzugt von mindestens 500 g/mol und besonders bevorzugt von mindestens 800 g/mol sowie
b) polyamidbildende Monomere, ausgewählt aus Lactamen, ω-Aminocarbonsäuren und/oder äquimolaren Kombinationen von Diamin und Dicarbonsäure.

In einer bevorzugten Ausführungsform liegt die Aminogruppenkonzentration des Polyamin-Polyamid-Copolymers im Bereich von 100 bis 2 500 mmol/kg.

Als Polyamin können beispielsweise folgende Substanzklassen verwendet werden:
- Polyvinylamine (Römpp Chemie Lexikon, 9. Auflage, Band 6, Seite 4921, Georg Thieme Verlag Stuttgart 1992);
- Polyamine, die aus alternierenden Polyketonen hergestellt werden (DE- OS 196 54 058);
- Dendrimere wie beispielsweise
((H₂N-(CH₂)₃)₂N-(CH₂)₃)₂-N(CH₂)₂-N((CH₂)₂-N((CH₂)₃-NH₂)₂)₂
(DE-A-196 54 179) oder
Tris(2-aminoethyl)amin, N,N-Bis(2-aminoethyl)-N',N'-bis[2-[bis(2-aminoethyl)amino]-ethyl]-1,2-ethandiamin,
3,15-Bis(2-aminoethyl)-6,12-bis[2-[bis(2-aminoethyl)amino]ethyl]-9-[bis[2-bis(2-aminoethyl)amino]ethyl]amino]ethyl]3,6,9,12,15-pentaazaheptadecan-1,17-diamin (J.M. Warakomski, Chem. Mat. 1992, 4, 1000 - 1004);
- lineare Polyethylenimine, die durch Polymerisation von 4,5-Dihydro-1,3-oxazolen und anschließende Hydrolyse hergestellt werden können (Houben-Weyl, Methoden der Organischen Chemie, Band E20, Seiten 1482 - 1487, Georg Thieme Verlag Stuttgart, 1987);
- verzweigte Polyethylenimine, die durch Polymerisation von Aziridinen erhältlich sind (Houben-Weyl, Methoden der Organischen Chemie, Band E20, Seiten 1482 - 1487, Georg Thieme Verlag Stuttgart, 1987) und die in der Regel folgende Aminogruppenverteilung besitzen:
   25 bis 46 % primäre Aminogruppen,
   30 bis 45 % sekundäre Aminogruppen und
   16 bis 40 % tertiäre Aminogruppen.

Das Polyamin besitzt im bevorzugten Fall ein zahlenmittleres Molekulargewicht Mₙ von maximal 20 000 g/mol, besonders bevorzugt von maximal 10 000 g/mol und insbesondere bevorzugt von maximal 5 000 g/mol.

Lactame bzw. ω-Aminocarbonsäuren, die als polyamidbildende Monomere eingesetzt werden, enthalten 4 bis 19 und insbesondere 6 bis 12 Kohlenstoffatome. Besonders bevorzugt werden ε-Caprolactam, ε-Aminocapronsäure, Capryllactam, ω-Aminocaprylsäure, Laurinlactam, ω-Aminododecansäure und/oder ω-Aminoundecansäure eingesetzt.

Kombinationen von Diamin und Dicarbonsäure sind beispielsweise Hexamethylendiamin/Adipinsäure, Hexamethylendiamin/Dodecandisäure, Octamethylendiamin/Sebacinsäure, Decamethylendiamin/Sebacinsäure, Decamethylendiamin/Dodecandisäure, Dodecamethylendiamin/Dodecandisäure und Dodecamethylendiamin/2,6-Naphthalindicarbonsäure. Daneben können aber auch alle anderen Kombinationen eingesetzt werden wie Decamethylendiamin/Dodecandisäure/Terephthalsäure, Hexamethylendiamin/Adipinsäure/ Terephthalsäure, Hexamethylendiamin/Adipinsäure/Caprolactam, Decamethylendiamin/Dodecandisäure/ω-Aminoundecansäure, Decamethylendiamin/Dodecandisäure/Laurinlactam, Decamethylendiamin/Terephthalsäure/Laurinlactam oder Dodecamethylendiamin/2,6-Naphthalindicarbonsäure/Laurinlactam.

Beim Polyamin-Polyamid-Copolymer kann die Zusammensetzung des Polyamidanteils in einem sehr weiten Bereich variieren, da die Verträglichkeit mit den Blendkomponenten offenbar von anderen Faktoren bestimmt wird und in der Regel gegeben ist.

Die Polyamin-Polyamid-Copolymere können nach verschiedenen Verfahren hergestellt werden. Hinsichtlich Einzelheiten sei auf die EP-A-1 216 825 verwiesen.

Bei erhöhten Anforderungen an die Berstdruckfestigkeit kann das Rohr zusätzlich eine Gewebeverstärkung entsprechend dem Stand der Technik enthalten. Diese kann entweder innerhalb einer Schicht oder zwischen zwei Schichten liegen. Aus Fertigungssicht ist das Aufbringen der Gewebeschicht auf die Außenschicht des Rohrs mit anschließender Kautschukbeschichtung technisch am einfachsten zu realisieren. Als Kautschuk kommt hier entweder ein vulkanisierbarer Kautschuk in Frage oder ein thermoplastisches Elastomer wie z. B. Santopren. Die Beschichtung mit Kautschuk kann auch erfolgen, ohne dass eine Gewebeschicht aufgebracht wird.

Das erfindungsgemäße Rohr wird als Druckluftbremsleitung, etwa in Lastkraftwagen, Aufliegern, Anhängern für Lastkraftwagen oder Trailern verwendet. In Lastkraftwagen werden die Leitungen in der Regel mit einem Betriebsdruck von bis zu 12,5 bar, bei Aufliegern bzw. Trailern mit 8,5 bar betrieben.

In den Beispielen wurden folgende Formmassen verwendet:
- PA:: VESTAMID® X7297, ein schlagzähmodifiziertes, weichmacherhaltiges PA 12
- HV:: Eine Formmasse aus 62,13 Gew.-Teilen PA612, 15,93 Gew.-Teilen PA6, 7,97 Gew.-Teilen Weichmacher (BBSA), 11,15 Gew.-Teilen Schlagzähmodifikator und 1,22 Gew.-Teilen Stabilisatoren

FM1:Formmasse aus 76,46 Gew.-% PA6 (ULTRAMID^{®} B4), 10 Gew.-% Weichmacher (BBSA), 13 Gew.-% Schlagzähmodifikatoren und 0,54 Gew.-% Stabilisatoren
FM2: Formmasse aus 87,46 Gew.-% PA6 (ULTRAMID^{®} B5, BASF AG), 12 Gew.-% Weichmacher (BBSA) und 0,54 Gew.-% Stabilisatoren.

Auf einer Mehrschichtrohranlage wurden Mehrschichtrohre entsprechend Vergleichsbeispiel 1 und Beispiel 1 mit einem Außendurchmesser von 8 mm und einer Wandstärke von 1 mm hergestellt, die anschließend geprüft wurden. Die Details sind in der Tabelle 1 zusammengestellt. Man erkennt, dass bei vergleichbarer Flexibilität der Rohre erfindungsgemäß der Berstdruck deutlich verbessert ist.

**Tabelle 1: Rohraufbauten und Prüfungsergebnisse**

| | Vergleichsbeispiel | Beispiel 1 |
|---|---|---|
| 1. Schicht | 0,15 mm PA | 0,15 mm PA |
| 2. Schicht | 0,1 mm HV | 0,1 mm HV |
| 3. Schicht | 0,5 mm FM1 | 0,5 mm FM2 |
| 4. Schicht | 0,1 mm HV | 0,1 mm HV |
| 5. Schicht | 0,15 mm PA | 0,15 mm PA |
| Kälteschlagzähigkeit | | |
| [Bruchquote] | | |
| - extrusionsfrisch gemäß DIN 73378 6.4.6, -40 °C | 0/10 | 0/10 |
| - extrusionsfrisch gemäß SAE J2260 7.6, -40 °C | 0/10 | 0/10 |
| - extrusionsfrisch gemäß SAE J844, -40 °C | 0/10 | 0/10 |
| Vergleichsspannung gemäß SAE J844 [MPa] | | |
| - bei 23 °C | 31,1 | 34,7 |
| - bei 100 °C | 13,0 | 14,5 |
| Minimaler Biegeradius | 35 | 35 |
| gemäß SAE J844 [mm] | | |
| Biegeeigenschaften gemäß GME 08100 7.7 | | |
| - maximale Biegekraft [N] | 67,4 | 69,2 |
| - Durchbiegung bei maxi-maler Biegekraft [mm] | 6,9 | 6,7 |
| - Biegekraft bei 3,5 mm Durchbiegung [N] | 57,5 | 58,5 |

## Patentansprüche

1. Rohr, das folgende Schichten enthält:
I. Eine Außenschicht aus einer Formmasse, die zu mindestens 40 Gew.-% ein Polyamid enthält, dessen Monomereinheiten im Mittel mindestens 8 C-Atome enthalten,
III. eine Zwischenschicht aus einer Formmasse, die aus folgenden Komponenten besteht:
a) 70 bis 99 Gew.-% Polyamid, ausgewählt aus PA6, PA66, PA6/66 sowie Mischungen hieraus und
b) 1 bis 30 Gew.-% Weichmacher,
wobei die Formmasse keinen Schlagzähmodifikator enthält, sowie
V. eine Innenschicht aus einer Formmasse, die zu mindestens 40 Gew.-% ein Polyamid
enthält, dessen Monomereinheiten im Mittel mindestens 8 C-Atome enthalten, wobei
a) der Außendurchmesser des Rohres im Bereich von 6 bis 20 mm liegt,
b) die Wanddicke im Bereich von 1,0 bis 2,0 mm liegt und
c) die Dicke der Schicht gemäß III 25 bis 75 % der Wanddicke beträgt.

2. Rohr gemäß Anspruch 1,
**dadurch gekennzeichnet,**
**dass**
- die Schichten I und III durch eine Haftvermittlerschicht II und/oder
- die Schichten III und V durch eine Haftvermittlerschicht IV miteinander verbunden sind, wobei die Dicke der Schichten II und IV 0,02 bis 0,2 mm beträgt.

3. Rohr gemäß einem der vorhergehenden Ansprüche,
**dadurch gekennzeichnet,**
**dass** es eine Druckluftbremsleitung ist.

## Claims

1. Pipe, which comprises the following layers:
I. an exterior layer composed of a moulding composition which comprises at least 40% by weight of a polyamide whose monomer units contain, on average, at least 8 carbon atoms,
III. an intermediate layer composed of a moulding composition which is composed of the following components:
a) from 70 to 99% by weight of polyamide, selected from PA6, PA66, PA6/66 and mixtures thereof and
b) from 1 to 30% by weight of plasticizer, where the moulding composition comprises no impact modifier, and
V. an interior layer composed of a moulding composition which comprises at least 40% by weight of a polyamide whose monomer units contain, on average, at least 8 carbon atoms,
where
a) the exterior diameter of the pipe is in the range from 6 to 20 mm,
b) the wall thickness is in the range from 1.0 to 2.0 mm and
c) the thickness of the polypropylene layer is from 25 to 75% of the wall thickness.

2. Pipe according to Claim 1,
**characterized in that**
- the layers I and III have bonding to one another via an adhesion-promoter layer II and/or
- the layers III and V have bonding to one
another via an adhesion-promoter layer IV, where the thickness of the layers II and IV is from 0.02 to 0.2 mm.

3. Pipe according to either of the preceding claims, **characterized in that**
it is an air-brake line.

## Revendications

1. Conduite qui contient les couches suivantes :
I. une couche extérieure en une masse de moulage qui contient à raison d'au moins 40% en poids un polyamide dont les unités monomères contiennent en moyenne au moins 8 atomes de carbone,
III. une couche intermédiaire en une masse de moulage qui est constituée par les composants suivantes :
a) 70 à 99% en poids de polyamide, choisi parmi PA6, PA66, PA6/66 ainsi que les mélanges de ceux-ci et
b) 1 à 30% en poids de plastifiant,
la masse de moulage ne contenant pas de modificateur de résilience, ainsi que
V. une couche intérieure en une masse de moulage qui contient à raison d'au moins 40% en poids un polyamide dont les unités monomères contiennent en moyenne au moins 8 atomes de carbone,
où
a) le diamètre extérieur de la conduite se situe dans la plage de 6 à 20 mm,
b) l'épaisseur de la paroi se situe dans la plage de 1,0 à 2,0 mm et
c) l'épaisseur de la couche selon III représente 25 à 75% de l'épaisseur de la paroi.

2. Conduite selon la revendication 1, **caractérisée en ce que**
- les couches I et III sont assemblées par une couche de promoteur d'adhérence II et/ou
- les couches III et V sont assemblées par une
couche de promoteur d'adhérence IV,
l'épaisseur des couches II et IV valant 0,02 à 0,2 mm.

3. Conduite selon l'une quelconque des revendications précédentes, **caractérisée en ce qu'**il s'agit d'une conduite de frein pneumatique.
